# EUROPEAN PATENT APPLICATION

(11) **EP 3 197 237 A1**
(43) Date of publication of application: **26.07.2017**
(21) Application number: 15758408.7
(22) Date of filing: 05.02.2015
(51) Int. Cl.: H04W 84/18

(54) **INTELLIGENT HOME TERMINAL AND CONTROL METHOD THEREFOR**

(30) Priority: 16.09.2014 CN 201410471212
(71) Applicant: ZTE Corporation, Shenzhen, Guangdong 518057 (CN)
(72) Inventor: YU, Fei, Shenzhen Guangdong 518057 (CN); ZHANG, Penggang, Shenzhen Guangdong 518057 (CN); JIANG, Hongbin, Shenzhen Guangdong 518057 (CN); WANG, Yi, Shenzhen Guangdong 518057 (CN); WANG, Bo, Shenzhen Guangdong 518057 (CN)
(74) Representative: Novagraaf Technologies
(86) International application number: PCT/CN2015/072331
(87) International publication number: WO 2015/131740

(57) **Abstract**

A control method of an intelligent home terminal and an intelligent home terminal are provided. In the method, voice information input by a user is received; it is judged whether the voice information is a preset voice instruction; when the voice information is judged to be the preset voice instruction, the voice instruction is converted into a control command, and a related operation is executed according to the control command. In the intelligent home terminal and the control method of the intelligent home terminal provided in the above technical solution, the user can quickly realize the operation and control of an intelligent home terminal just through the voice inputting operation without entering a Web interface and a network management interface and performing complex operations. There is no requirement for network technical level of the user. This technical solution is applicable to various user groups, especially to the elders and people who lack network technology knowledge.

## Description

### Technical Field

The present disclosure relates to the field of intelligent terminal application technology, and in particular to an intelligent home terminal and a control method of an intelligent home terminal.

### Background

With the development of network technologies, intelligent home terminals slowly step into people's daily life. The intelligent home terminal is an indispensable device for home Internet access. In order to prevent the wireless network from being stolen during the use of the intelligent home terminal, a user needs to configure wireless network functions for the intelligent home terminal before using the intelligent home terminal, such as setting a service set identifier (SSID) and wireless network key. In addition, during the use of the intelligent home terminal, the following operations may also be executed: the operation of turning on and off the wireless network and the operation of turning on and off a VoIP function.

However, at present, when using the intelligent home terminal, the user needs to access a home gateway through Internet Explorer (IE) and log on a web interface of a system before the user performs function control operations related to the intelligent home terminal. The operation procedure is complex and this requires high operation technical level of the user. However, most users (such as the elders and people who lack network technology knowledge) have limited operation level, and therefore are unable to perform right control operations for related functions when using the intelligent home terminal.

### Summary

Embodiments of the present disclosure provide an intelligent home terminal and a control method of an intelligent home terminal to solve the technical problem that how to conveniently and quickly control the intelligent home terminal without entering a Web interface and a network management interface and performing complex operations.

To solve the above technical problem, an embodiment of the present disclosure provides a control method of an intelligent home terminal, including:
Step 1, receiving voice information input by a user and judging whether the voice information is a preset voice instruction; and
Step 2, when the voice information is judged to be the preset voice instruction, converting the voice instruction into a control command, and executing a related operation according to the control command.

Optionally, the control method of the intelligent home terminal may further include:
when the voice information is judged to be a non-preset voice instruction, generating and outputting voice prompt information so as to prompt the user that the voice information is wrong and input of right voice information is required.

Optionally, the method may further include:
after executing the related operation according to the control command,
judging whether execution of the related operation is successful;
when the execution of the related operation is judged to be successful, judging whether execution of a next operation is needed; and
when the execution of the next operation is needed, generating and outputting voice prompt information so as to prompt the user to input voice information corresponding to the next operation, and returning to execute Step 1.

Optionally, the method may further include:
when the execution of the related operation is judged to be successful, generating and outputting voice prompt information so as to acknowledge the user that the execution of the related operation is successful; and
when the execution of the related operation is judged to be failed, generating and outputting voice prompt information so as to acknowledge the user that the execution of the related operation is failed.

In addition, to solve the above technical problem, another embodiment of the present disclosure provides an intelligent home terminal, including:
a judging module, arranged to receive voice information input by a user and judge whether the voice information is preset voice information; and
an executing module, arranged to, when the voice information is judged to be the preset voice instruction, convert the voice instruction into a control command, and execute a related operation according to the control command.

Optionally, the intelligent home terminal may further include:
a prompting module, arranged to generate and output voice prompt information when the voice information is a non-preset voice instruction so as to prompt the user that the voice information is wrong and input of right voice information is required.

Optionally, the judging module is further arranged to judge whether execution of the related operation is successful, and judge whether execution of a next operation is needed when the execution of the related operation is judged to be successful; and
a prompting module is further arranged to generate and output voice prompt information when the execution of the next operation is needed so as to prompt the user to input voice information corresponding to the next operation.

Optionally, the prompting module is further arranged to generate and output voice prompt information when the execution of the related operation is judged to be successful so as to acknowledge the user that the execution of the related operation is successful, and to generate and output voice prompt information when the execution of the related operation is judged to be failed so as to acknowledge the user that the execution of the related operation is failed.

Optionally, the prompting module is arranged to output the voice prompt information in the following manner:
the prompting module is arranged to output the voice prompt information through an inner magnetic horn.

To solve the above technical problem, another embodiment of the present disclosure provides a computer program, including a program instruction. Execution of the program instruction enables implementation of the above method.

To solve the above technical problem, still another embodiment of the present disclosure provides a medium carrying the above computer program.

In the intelligent home terminal and the control method of the intelligent home terminal provided in the above technical solution, by the way of receiving the voice information input by a user, judging whether the voice information is a preset voice instruction, and when the voice information is judged to be the preset voice instruction converting the voice instruction into a control command and executing a related operation according to the control command, the user can quickly realize the operation and control of an intelligent home terminal just through an voice inputting operation without entering a Web interface and a network management interface and performing complex operations. There is no requirement for network technical level of the user. This technical solution is applicable to various user groups, especially to the user group of the elders and the user group who lack network technology knowledge.

### Brief Description of the Drawings

Fig. 1 shows a flowchart of a first control method of an intelligent home terminal according to an embodiment of the present disclosure;
Fig. 2 shows a flowchart of a second control method of an intelligent home terminal according to an embodiment of the present disclosure;
Fig. 3 shows a diagram of a functional module of a first intelligent home terminal according to an embodiment of the present disclosure; and
Fig. 4 shows a diagram of a functional module of a second intelligent home terminal according to an embodiment of the present disclosure.

### Detailed Description of the Embodiments

It should be understood that embodiments described here are just intended to explain the present disclosure instead of limiting the present disclosure.

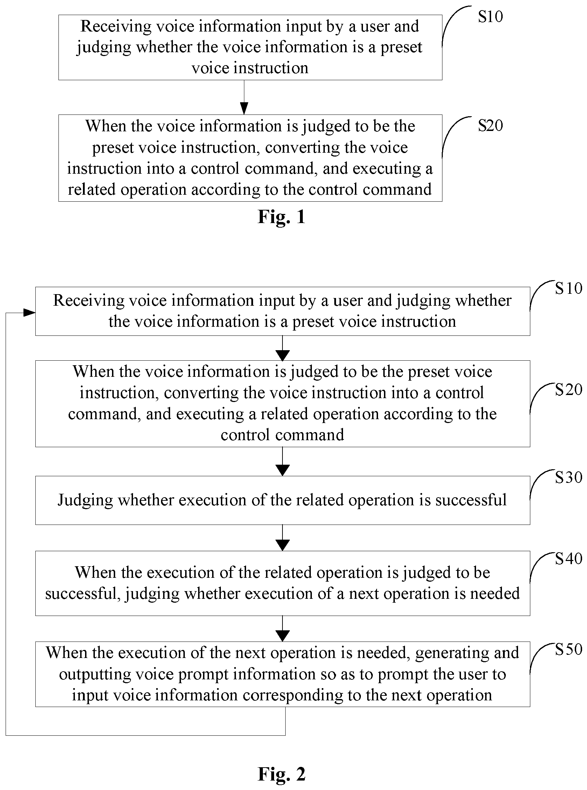

The embodiments of the present disclosure provide a control method of an intelligent home terminal. With reference to Fig. 1, Fig. 1 shows a flowchart of a first control method of an intelligent home terminal according to an embodiment of the present disclosure. In the embodiment, the control method of the intelligent home terminal includes the following steps.

Step 10: voice information input by a user is received and it is judged whether the voice information is a preset voice instruction.

In the embodiment, a voice instruction list may be preset in the intelligent home terminal, and each voice instruction corresponds to one control command. Only when the voice information input by the user is a voice instruction in the preset voice instruction list, the intelligent home terminal can convert the voice instruction into the corresponding control command.

In the embodiment, after judging whether the voice information is a preset voice instruction, the following processing is further included. When the voice information is a non-preset voice instruction, voice prompt information is generated and output so as to prompt the user that the voice information is wrong and input of right voice information is required. Namely, in order to ensure that the user can successfully complete the operation and control of the intelligent home terminal, when the user voice information is input wrongly, the voice prompt information is generated and output so as to tell the user that the voice is wrong and prompt the user to input the right voice information. For example, the voice prompt information may be generated and output to tell the user that the voice inputting operation should be performed according to content of an operating manual (for example, if wireless network needs to be turned off, the voice information that user needs to input is "turn off wireless network" instead of "I want to turn off wireless network" or others).

Step 20: when the voice information is judged to be the preset voice instruction, the voice instruction is converted into a control command, and a related operation is executed according to the control command.

In the embodiment, the related operation executed by the intelligent home terminal may include one or more of the followings: an operation of configuring a wireless network, an operation of turning on a wireless network, an operation of turning off a wireless network, an operation of turning on a VoIP function and an operation of turning off a VoIP function.

With reference to Fig. 2, Fig. 2 shows a flowchart of a second control method of an intelligent home terminal according to an embodiment of the present disclosure. The embodiment contains some improvements based on the above embodiment. The improvement lies in that after the step of executing the related operation according to the control command, the method may further include the following steps.

Step 30: it is judged whether execution of the related operation is successful.

Step 40: when the execution of the related operation is judged to be successful, it is judged whether execution of a next operation is needed.

Step 50: when the execution of the next operation is needed, voice prompt information is generated and output so as to prompt the user to input voice information corresponding to the next operation, and return to execute Step 10.

With the implementation of such settings in the embodiment, according to the voice prompt information, the user can know what voice information needs to be input next. Namely, the user can complete the control and operation of the intelligent home terminal just by performing the voice inputting operation according to the voice prompt information of the intelligent home terminal.

In the embodiment, after judging whether the execution of the related operation is successful, the method may further include the following processing. Voice prompt information is generated and output when the execution of the related operation is judged to be successful, so as to acknowledge the user that the execution of the related operation is successful. Voice prompt information is generated and output when the execution of the related operation is judged to be failed, so as to acknowledge the user that the execution of the related operation is failed. Namely, in the embodiment, the intelligent home terminal presets corresponding success prompt information and failure prompt information for each related operation. When the execution of the related operation is judged to be successful, the corresponding success prompt information is converted into the success voice prompt information and is output, so as to acknowledge the user that the execution of the related operation is successful. When the execution of the related operation is judged to be failed, the corresponding failure prompt information is converted into failure voice prompt information and is output, so as to acknowledge the user that the execution of the related operation is failed. Such a setting can make the user timely know current status of the intelligent home terminal, and determine the next operation according to current status of the intelligent home terminal.

In the embodiment of the above control method of an intelligent home terminal, by the way of receiving voice information input by a user, judging whether the voice information is a preset voice instruction, converting the voice instruction into a control command when the voice information is judged to be the preset voice instruction, and executing a related operation according to the control command, the user can quickly realize the operation and control of the intelligent home terminal just through the voice inputting operation without entering a Web interface and a network management interface and performing complex operations. There is no requirement for network technical level of the user. This technical solution is applicable to various user groups, especially to the user group of the elders and the user group who lacks network technology knowledge.

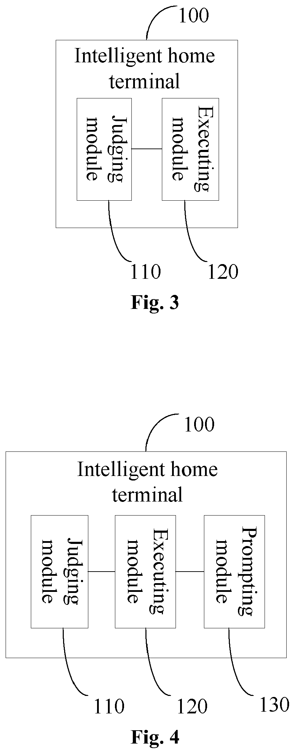

The embodiments of the present disclosure provide an intelligent home terminal. With reference to Fig. 3, Fig. 3 shows a diagram of a functional module of a first intelligent home terminal according to an embodiment of the present disclosure. In the embodiment, the intelligent home terminal 100 includes a judging module 110 and an executing module 120. The judging module 110 is arranged to receive voice information input by a user and judge whether the voice information is preset voice information. The executing module 120 is arranged to convert the voice instruction into a control command when the voice information is judged to be the preset voice instruction, and execute a related operation according to the control command.

In the embodiment, a voice instruction list may be preset in the intelligent home terminal, and each voice instruction corresponds to one control command. Only when the voice information input by the user is a voice instruction in the preset voice instruction list, the intelligent home terminal can convert the voice instruction into the corresponding control command.

In the embodiment, the related operation executed by the intelligent home terminal may include one or more of the followings: an operation of configuring a wireless network, an operation of turning on a wireless network, an operation of turning off a wireless network, an operation of turning on a VoIP function and an operation of turning off a VoIP function.

With reference to Fig. 4, Fig. 4 shows a diagram of a functional module of a second intelligent home terminal according to an embodiment of the present disclosure. The intelligent home terminal 100 in the embodiment may further include a prompting module 130. The prompting module 130 is arranged to generate and output voice prompt information when the voice information is a non-preset voice instruction so as to prompt the user that the voice information is wrong and input of right voice information is required.

In the embodiment, in order to ensure the user can successfully complete the operation and control of the intelligent home terminal when the voice information is a non-preset voice instruction. Namely, when the user voice information is input wrongly, the voice prompt information is generated and output through the prompting module 130 so as to prompt the user that the voice information is wrong and input of right voice information is required. For example, the voice prompt information may be generated and output to tell the user that the voice inputting operation should be performed according to content of an operating manual (for example, if wireless network needs to be turned off, the voice information that user needs to input is "turn off wireless network" instead of "I want to turn off wireless network" or others).

In the embodiment, the judging module 110 is further arranged to judge whether execution of the related operation is successful and judge whether execution of a next operation is needed when the execution of the related operation is judged to be successful. The prompting module 130 is further arranged to generate and output voice prompt information when the execution of the next operation is needed so as to prompt the user to input voice information corresponding to the next operation. With such a setting, according to the voice prompt information, the user can know what voice information needs to be input next. Namely, the user can complete the control and operation of the intelligent home terminal just by performing the voice inputting operation according to the voice prompt information of the intelligent home terminal.

In the embodiment, the prompting module 130 is further arranged to generate and output voice prompt information when the execution of the related operation is judged to be successful so as to acknowledge the user that the execution of the related operation is successful, and to generate and output voice prompt information when the execution of the related operation is judged to be failed so as to acknowledge the user that the execution of the related operation is failed. Namely, in the embodiment, the intelligent home terminal presets corresponding success prompt information and failure prompt information for each related operation. When the execution of the related operation is judged to be successful, the corresponding success prompt information is converted into success voice prompt information and is output, so as to acknowledge the user that the execution of the related operation is successful. When the execution of the related operation is judged to be failed, the corresponding failure prompt information is converted into failure voice prompt information and is output, so as to acknowledge the user that the execution of the related operation is failed. Such a setting can make the user timely know current status of the intelligent home terminal, and determine the next operation according to current status of the intelligent home terminal.

In the embodiment of the above intelligent home terminal, by the way of receiving voice information input by a user, judging whether the voice information is a preset voice instruction, converting the voice instruction into a control command when the voice information is judged to be the preset voice instruction, and executing a related operation according to the control command, the user can quickly realize the operation and control of an intelligent home terminal just through the voice inputting operation without entering a Web interface and a network management interface and performing complex operations. There is no requirement for network technical level of the user. This technical solution is applicable to various user groups, especially to the user group of the elders and the user group who lacks network technology knowledge.

Those having ordinary skill in the art can understand that all or partial steps in the above method can be finished by related hardware under instructions of programs. The programs can be stored in a computer readable storage medium, such as a read-only storage, a magnetic disk and a compact disk. Optionally, all or partial steps in the above embodiments can also be realized by the use of one or more integrated circuits. Accordingly, each module/unit in the above embodiments can be realized in the form of hardware and can also be realized in the form of a software functional module. The present disclosure is not limited to any combination of software and hardware in any specific form.

The above is just the preferred embodiments of the present disclosure and not intended to limit the scope of protection of the present disclosure, and any equivalent structures or equivalent procedure modifications that are made by the use of contents of the description and drawings of the present disclosure, or direct or indirect applications to other related technology fields similarly fall within the scope of protection defined by the appended claims of the present disclosure.

### Industrial Applicability

By virtue of the above technical solutions, the user is enabled to quickly realize the operation and control of an intelligent home terminal just through the voice inputting operation without entering a Web interface and a network management interface and performing complex operations. There is no requirement for network technical level of the user. This technical solution is applicable to various user groups, especially to the user group of the elders and the user group who lack network technology knowledge.

## Claims

1. A control method of an intelligent home terminal, comprising the following steps:
Step 1, receiving voice information input by a user and judging whether the voice information is a preset voice instruction; and
Step 2, when the voice information is judged to be the preset voice instruction, converting the voice instruction into a control command, and executing a related operation according to the control command.

2. The control method of the intelligent home terminal as claimed in claim 1, further comprising:
when the voice information is judged to be a non-preset voice instruction, generating and outputting voice prompt information so as to prompt the user that the voice information is wrong and input of right voice information is required.

3. The control method of the intelligent home terminal as claimed in claim 1, further comprising:
after executing the related operation according to the control command,
judging whether execution of the related operation is successful;
when the execution of the related operation is judged to be successful, judging whether execution of a next operation is needed; and
when the execution of the next operation is needed, generating and outputting voice prompt information so as to prompt the user to input voice information corresponding to the next operation, and returning to execute Step 1.

4. The control method of the intelligent home terminal as claimed in claim 3, further comprising:
when the execution of the related operation is judged to be successful, generating and outputting voice prompt information so as to acknowledge the user that the execution of the related operation is successful; and
when the execution of the related operation is judged to be failed, generating and outputting voice prompt information so as to acknowledge the user that the execution of the related operation is failed.

5. An intelligent home terminal, comprising:
a judging module, arranged to receive voice information input by a user and judge whether the voice information is preset voice information; and
an executing module, arranged to, when the voice information is judged to be the preset voice instruction, convert the voice instruction into a control command and execute a related operation according to the control command.

6. The intelligent home terminal as claimed in claim 5, further comprising:
a prompting module, arranged to generate and output voice prompt information when the voice information is a non-preset voice instruction so as to prompt the user that the voice information is wrong and input of right voice information is required.

7. The intelligent home terminal as claimed in claim 5, wherein
the judging module is further arranged to judge whether execution of the related operation is successful, and judge whether execution of a next operation is needed when the execution of the related operation is judged to be successful; and
a prompting module is further arranged to generate and output voice prompt information when the execution of the next operation is needed so as to prompt the user to input voice information corresponding to the next operation.

8. The intelligent home terminal as claimed in claim 7, wherein
the prompting module is further arranged to generate and output voice prompt information when the execution of the related operation is judged to be successful so as to acknowledge the user that the execution of the related operation is successful, and to generate and output voice prompt information when the execution of the related operation is judged to be failed so as to acknowledge the user that the execution of the related operation is failed.

9. The intelligent home terminal as claimed in any one of claims 6-8, wherein the prompting module is arranged to output the voice prompt information in the following manner:
the prompting module is arranged to output the voice prompt information through an inner magnetic horn.

10. A computer program, comprising a program instruction, wherein execution of the program instruction enables implementation of the method as claimed in any one of claims 1-4.

11. A medium carrying the computer program as claimed in claim 10.
